Europäisches Patentamt

European Patent Office

Office européen des brevets

(19)

(11) Veröffentlichungsnummer : **0 018 319**
**B1**

(12) # EUROPÄISCHE PATENTSCHRIFT

(45) Veröffentlichungstag der Patentschrift :
**13.01.82**

(21) Anmeldenummer : **80810096.0**

(22) Anmeldetag : **21.03.80**

(51) Int. Cl.³ : **H 05 K 5/00**, H 05 K 11/02,
H 04 B 1/03, H 04 B 1/38

(54) **Köcher zur zeitweiligen Halterung eines tragbaren Funkgerätes und Funkgerät.**

(30) Priorität : **21.03.79 CH 2648/79**

(43) Veröffentlichungstag der Anmeldung :
**29.10.80 (Patentblatt 80/22)**

(45) Bekanntmachung des Hinweises auf die Patenterteilung : **13.01.82 Patentblatt 82/02**

(84) Benannte Vertragsstaaten :
**AT BE CH DE FR IT NL SE**

(56) Entgegenhaltungen :
**DE - B - 1 239 749**
**DE - B2 - 2 153 827**
**US - A - 3 936 833**

(73) Patentinhaber : **Autophon A.G.**
**Ziegelmattstrasse 1-15**
**CH-4500 Solothurn 3 (CH)**

(72) Erfinder : **Reber, Hansrudolf**
**Balmfluhstrasse 322**
**CH-4524 Günsberg/SO (CH)**
Erfinder : **Flury, Stephan**
**Mühleweg 12**
**CH-4708 Luterbach/SO (CH)**

(74) Vertreter : **Bovard, Fritz Albert et al**
**Bovard & Cie. Patentanwälte VSP-Rechtsanwälte**
**Optingenstrasse 16**
**CH-3000 Bern 25 (CH)**

Imprimerie Jouve, 18, rue St-Denis, 75001 Paris, France

Köcher zur zeitweiligen Halterung eines tragbaren Funkgerätes und Funkgerät

Die vorliegende Erfindung betrifft einen Köcher zur zeitweiligen Halterung eines tragbaren Funkgerätes und ein Funkgerät. Dieses Funkgerät besitzt eine aufladbare Batterie und einen mit einer Grundfläche versehenen quaderförmigen Teil. Dieser Teil ist durch eine Einschiebeöffnung in den Köcher einschiebbar. Sowohl am Köcher als auch am Funkgerät sind dabei Schleif- und Steckkontakte angebracht, die beim Einschieben des Funkgerätes gegenseitig zusammenwirken und einerseits zur Zuführung einer Speisespannung für das Funkgerät und zur Aufladung der Batterie von einer am Köcher angeschlossenen Speisespannungsquelle aus und anderseits zum Anschluss von mit dem Köcher in Verbindung stehenden Anordnungen, wie Antenne, Sprech- und Fernbediengerät an das Funkgerät dienen.

Solche Köcher und Funkgeräte sind bekannt ; vgl. die US-A-3 936 833. Bei diesen bekannten Geräten wird die Speisespannung über die Grundfläche des quaderförmigen Teils zugeführt, wodurch ein solcher Köcher in der Länge dem darin einzuschiebenden Funkgerät genau angepasst sein muss und somit nur für die Halterung eines einzigen Typs von Funkgeräten dienen kann. Dieser Umstand kann in Anlagen mit verschiedenen Typen von Funkgeräten zu Schwierigkeiten führen und verteuert die Lagerhaltung.

Die vorliegende Erfindung ermöglicht nun, Funkgeräte verschiedener Längen in den Köcher einzuschieben. Sie betrifft einen Köcher und ein Funkgerät der beschriebenen Art, welche dadurch gekennzeichnet sind, dass der Köcher an dem der Einschiebeöffnung gegenüberliegenden Ende offen ist, dass die Kontakte zur Zuführung der Speisespannung als Schleifkontakte auf den Seitenflächen des genannten quaderförmigen Teils angebracht sind, und dass die übrigen Kontakte als in der Einschieberichtung verlaufende Steckkontakte einerseits auf der gegen die genannte Einschiebeöffnung gerichteten Seite eines am genannten quaderförmigen Teil angesetzten Erkers des Funkgerätes und anderseits am Köcher an einer den Steckkontakten am Funkgerät entsprechenden Stelle neben der Einschiebeöffnung angebracht sind.

In einer bevorzugten Ausführungsform der Erfindung ist der Köcher aus zwei ausschliesslich aus Kunststoff bestehenden Schalen zusammengesetzt, welche Aussparungen aufweisen und miteinander verschraubt sind. Die übrigen Bestandteile des Köchers sind dabei ohne besondere Befestigungen in einen Teil dieser Aussparungen eingelegt.

Eine weitere besondere Ausführungsform des Köchers eignet sich für die Halterung von Funkgerätetypen verschiedener Länge und ist durch Absägen auf die Länge des längsten darin einzuschiebenden Funkgerätes verkürzbar.

Eine weitere besondere Ausführungsform der Erfindung betrifft einen Köcher mit einem Schloss zur Verhinderung des Herausnehmens des Funkgerätes und mit Befestigungsschrauben, welche derart angeordnet sind, dass ein Abschrauben des Köchers von seiner Unterlage nicht möglich ist, solange sich ein Funkgerät darin befindet.

Die Erfindung wird nun anhand eines Ausführungsbeispiels erklärt.

Die Figur 1 zeigt die Aussenansicht des obern Teils eines Funkgerätes.

Die Figur 2 zeigt eine Ansicht des auf einer nicht dargestellten Unterlage befestigten Köchers.

Die Figur 3 zeigt eine Ansicht des auf einer Unterlage befestigten Köchers von der Einschiebeöffnung aus gesehen.

Die Figur 4 zeigt eine untere Schale des Köchers mit einem darin eingeschobenen Funkgerät. Ein Teil des Funkgerätes ist dabei geschnitten dargestellt.

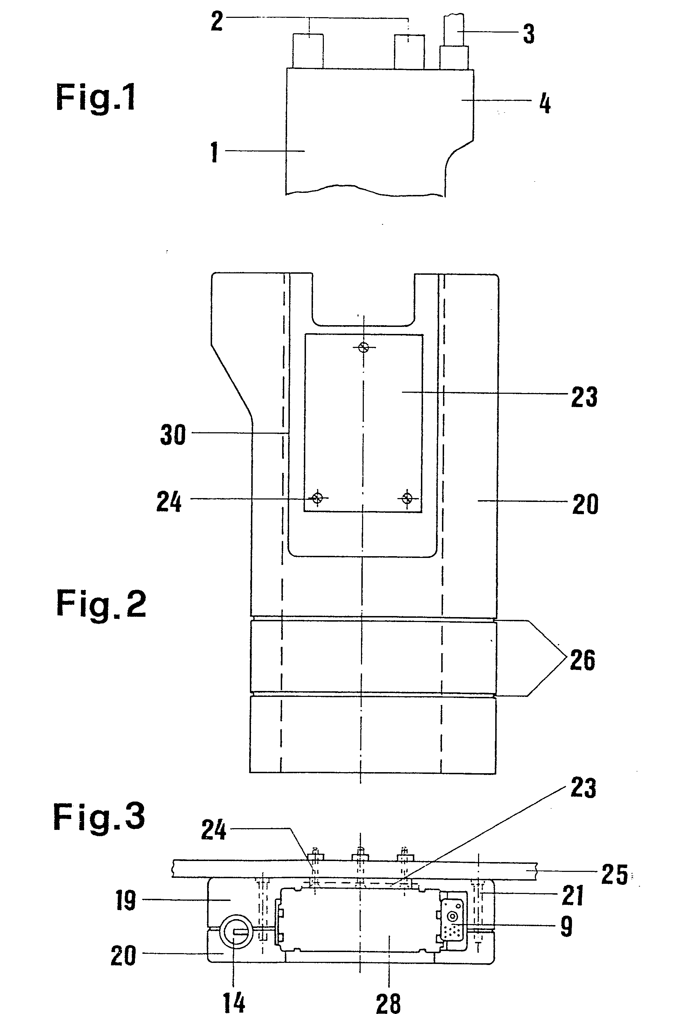

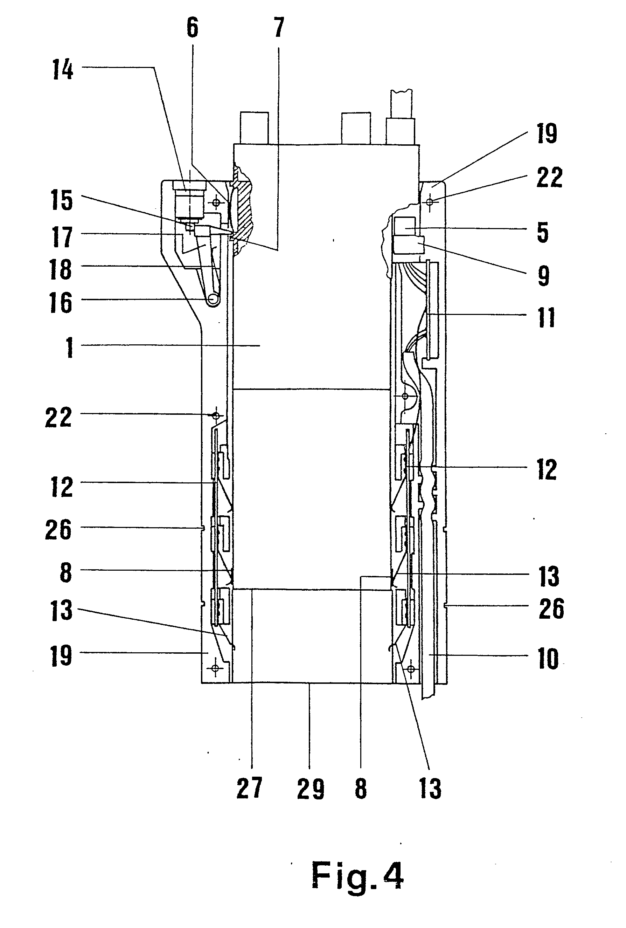

Das in Figur 1 dargestellte Funkgerät weist Bedienungselemente 2 und eine Antenne 3 auf. Es besteht aus einem quaderförmigen Teil 1 mit einer Grundfläche 27 und einem Erker 4. Wie aus Figur 4 hervorgeht, ist in diesem Erker ein Stecker 5 eingebaut. An diesen Stecker sind der Antennenanschluss des Gerätes und die Anschlüsse für Lautsprecher, Mikrophon, Sprechtaste und andere Bedienungselemente geführt. Dabei sind bekannte, nicht dargestellte Massnahmen getroffen, dass die am Gerät befestigte Antenne 3 und die nicht dargestellten, im Gerät eingebauten Wandler (Mikrophon und Lautsprecher), ausgeschaltet werden, wenn ein Gegenstecker in den Stecker 5 eingesteckt wird. Das Funkgerät weist ferner eine versenkt angeordnete Sprechtaste 6 auf, wobei sich aus der versenkten Anordnung ein Rand 7 ergibt. An seinem von der Einschiebeöffnung entfernten Ende weist das Funkgerät vorspringende seitliche Kontakte 8 auf, über welche es speisbar und die darin eingebaute Batterie aufladbar ist. Zu den zwei in der Figur 4 sichtbaren Kontakten 8 können noch weitere hinzukommen, die in gleicher Entfernung von der Grundfläche 27 wie die Kontakte 8 angeordnet sind, jedoch unter den Kontakten 8 liegen, so dass sie nicht sichtbar sind. Solche weitere Kontakte können in bekannter Weise der Steuerung des Ladestroms dienen.

Wie weiter aus den Figuren 4 und 3 ersichtlich ist, ist der Köcher rohrförmig und weist eine Einschiebeöffnung 28 und eine der Einschiebeöffnung gegenüberliegende Oeffnung 29 auf. In der Nähe der Einschiebeöffnung 28 ist ein Stecker 9 angebracht, an welchem über das Kabel 10 und die Anschlussplatte 11 nicht dargestellte Anordnungen wie eine am Standort des Köchers vorhandene Antenne und ein Fernbediengerät angeschlossen sind. Im Köcher sind ausserdem zwei Platten 12 mit Kontaktfedern 13 angeordnet, welche ebenfalls über die Platte 11 an das Kabel 10 angeschlossen sind. Diese Federn, von denen auch mehrere in bezug auf die Figur 4 hintereinander angeordnet sein können, sind in Gruppen eingeteilt, wobei alle diejenigen Federn als zu einer Gruppe gehörend bezeichnet werden, welche von der Oeffnung 29 des Köchers gleich weit entfernt sind. Die einander entsprechenden Federn der verschiedenen Gruppen sind untereinander elektrisch parallel geschaltet.

Ein um die Achse 16 drehbar gelagerter Riegel 17 wird von der Feder 18 nach aussen gedrückt. Ein Schloss 14 weist einen beweglichen Teil auf, der durch einen nicht dargestellten Schlüssel um jeweils 90° drehbar ist und einen Fortsatz 15 mit rechteckigem Querschnitt besitzt, welcher bei der Drehung des Schlüssels jeweils den Riegel 17 bewegt.

Wie aus den Figuren 2 und 3 ersichtlich ist, ist der Köcher aus zwei Schalen 19 und 20 zusammengesetzt, welche durch Schrauben 21 zusammengehalten sind. Die Durchgangslöcher für diese Schrauben sind in der Figur 4 mit 22 bezeichnet. In die Schale 19 ist nun eine Metallplatte 23 eingelegt, unter deren Mitwirkung der Köcher mit Hilfe der drei Schrauben 24 an einer Unterlage 25 befestigt ist. Diese Schrauben sind durch den in der Schale 20 befindlichen Ausschnitt 30 soweit zugänglich, dass die beiden untereinander verschraubten, den Köcher bildenden Schalen 19 und 20 gemeinsam an der Unterlage 25 befestigt werden können.

Der beschriebene Köcher eignet sich zur Aufnahme von verschiedenen Funkgerätetypen, deren quaderförmiger Teil drei verschiedene Längen aufweist. Das in Figur 4 dargestellte Funkgerät ist ein Typ mit einer mittleren Länge.

Sofern nun ein tragbares Funkgerät mit seinem quaderförmigen Teil 1 in den beschriebenen Köcher eingeschoben wird, werden die beiden Stecker 5 und 9 zusammengesteckt und somit das Gerät auf Fernbedienung umgeschaltet, die angebaute Antenne abgeschaltet und eine Antenne über das Kabel 10 angeschlossen. Die Kontakte 8 des Funkgerätes schleifen beim Einschieben an den Federn 13, und der Befestigungsort der verschiedenen Gruppen von Federn ist derart an die drei Typen von Funkgeräten angepasst, dass im voll eingeschobenen Zustand eines Gerätes die Kontakte 8 mit einer der Gruppen von Federn in Berührung kommen. Die Federn und die Kontakte 8 werden dabei als « Schleifkontakte » bezeichnet. Der Köcher eignet sich somit ohne jede Aenderung für die abwechslungsweise Aufnahme von Funkgeräten mit verschieden langem quaderförmigem Teil.

Sofern ein Funkgerät in den Köcher eingeschoben ist, kann durch Betätigung des Schlosses 14 der Riegel 17 soweit vorgeschoben werden, dass er am Rand 7 einhängt und damit das Gerät gegen ein Herausnehmen sichert. Da das eingeschobene Funkgerät die Schrauben 24, mit denen der Köcher an der Unterlage befestigt ist, zudeckt, ist — wenn man vom Lösen der Schrauben 24 von der dem Köcher abgewandten Seite der Unterlage aus absieht — ein Entfernen des Funkgerätes samt Köcher ohne Gewaltanwendung nicht möglich. Infolge des Umstandes, dass im beschriebenen Zustand auch die die Schalen zusammenhaltenden Schrauben 21 nicht mehr zugänglich sind, ist auch ein Auseinanderschrauben des Köchers und damit der Diebstahl eines abgeschlossenen Funkgerätes nicht möglich.

Die Platten 11 und 12, der Stecker 9, das Schloss 14, der Riegel 17 und die Feder 18 sind nicht mit besondern Befestigungsmitteln befestigt. Für alle diese Bauelemente sind entsprechend geformte Aussparungen in den beiden Schalen 19 und 20 vorhanden, in welche die Bauelemente lediglich eingelegt sind. Im verschraubten Zustand der beiden Schalen ist damit die Lage der Bauelemente eindeutig festgelegt.

Sofern der Köcher in einer Anlage verwendet wird, in welcher das Einschieben von Funkgeräten des Typs mit der grössten Länge nicht in Frage kommt, ist es möglich, den Köcher zu verkürzen. Die an beiden Schalen angebrachten Kerben 26, deren Abstände von der Einschiebeöffnung 28 und von der Oeffnung 29 je zwischen den entsprechenden Abständen den verschiedenen Gruppen von Kontaktfedern 13 liegen, ermöglichen das Absägen von einem oder zwei je eine Kontaktgruppe enthaltenden Abschnitten, wodurch eine gegebenenfalls störende Beanspruchung von Platz durch nicht benötigte Teile des Köchers vermieden werden kann. Es empfiehlt sich dabei, die Platte 12 getrennt vom Köcher zu verkürzen.

**Ansprüche**

1. Köcher zur zeitweiligen Halterung eines tragbaren Funkgerätes und Funkgerät mit einer aufladbaren Batterie und mit einem mit einer Grundfläche (27) versehenen quaderförmigen Teil (1), welcher Teil durch eine Einschiebeöffnung (28) in den Köcher einschiebbar ist, mit sowohl am Köcher als auch am Funkgerät angebrachten, beim Einschieben des Funkgerätes gegenseitig zusammenwirkenden Schleif- und Steckkontakten einerseits zur Zuführung einer Speisespannung für das Funkgerät und zur Aufladung der Batterie von einer am Köcher angeschlossenen Speisespannungsquelle aus und anderseits zum Anschluss von mit dem Köcher in Verbindung stehenden Anordnungen wie Antenne, Sprech- und Fernbediengerät an das Funkgerät, dadurch gekennzeichnet, dass der Köcher an dem der Einschiebeöffnung (28) gegenüberliegenden Ende (29) offen ist, dass die Kontakte (8, 13) zur Zuführung der Speisespannung als Schleifkontakte auf den Seitenflächen des genannten quaderförmigen Teils (1) angebracht sind und dass die übrigen Kontakte als in der Einschieberichtung verlaufende Steckkontakte (5, 9) einerseits auf der gegen die genannte Einschiebeöffnung (28) gerichteten Seite eines am genannten quaderförmigen Teil (1) angesetzten Erkers (4) des Funkgerätes und anderseits am Köcher an einer den Steckkontakten am Funkgerät entsprechenden Stelle neben der Einschiebeöffnung (28) angebracht sind.

2. Köcher nach dem Patentanspruch 1, dadurch gekennzeichnet, dass er aus zwei ausschliesslich aus Kunststoff bestehenden, Aussparungen aufweisenden, miteinander verschraubten Schalen (19, 20) zusammengesetzt ist, dass die Schleifkontakte (13) auf mindestens einer Platte (12) befestigt sind und dass sowohl der die Steckkontakte tragende Stecker (9) als auch die genannte Platte (12) ohne besondere Befestigungen in einen Teil der genannten Aussparungen eingelegt sind.

3. Köcher nach dem Patentanspruch 2, welcher zur Halterung von verschiedenen Funkgeräten, deren quaderförmiger Teil (1) den gleichen Querschnitt, jedoch verschiedene Längen aufweist, geeignet ist, dadurch gekennzeichnet, dass die Schleifkontakte (13) mindestens in zwei Gruppen eingeteilt sind und dass diese Gruppen je in verschiedener Entfernung von der Einschiebeöffnung angeordnet sind, wodurch jeweils die Kontakte einer einzigen dieser Gruppen mit den am eingeschobenen Funkgerät angebrachten Kontakten (8) zusammenwirken und die den Kontakt herstellende Gruppe durch die Länge des genannten quaderförmigen Teils (1) bestimmt ist.

4. Köcher nach dem Patentanspruch 3, dadurch gekennzeichnet, dass er an seinem der Einschiebeöffnung (28) angewandten Ende (29) eine der um eins verminderten Zahl von Kontakt-Gruppen entsprechende Zahl von parallel zum Rand der dort befindlichen Oeffnung (29) verlaufende Kerben (26) aufweist, deren Abstände von der Einschiebeöffnung (28) zwischen den entsprechenden Abständen der Kontakt-Gruppen liegen und welche somit ringförmige, je eine Kontakt-Gruppe enthaltende Abschnitte abgrenzen und ein Absägen von einem oder mehreren solcher Abschnitte zwecks Verkürzung der Länge des Köchers auf ein dem längsten einzuschiebenden Funkgerät angepasstes Mass erleichtern.

5. Köcher nach dem Patentanspruch 2 mit einem Stützpunkt für die von den Kontakten nach aussen führenden leitungen (10), dadurch gekennzeichnet, dass der Stützpunkt aus einer Leiterplatte (11) besteht, welche ohne besondere Befestigungen in in den genannten Schalen (19, 20) angebrachte Aussparungen eingelegt ist.

6. Köcher nach dem Patentanspruch 2, enthaltend ein Schloss (14) zur Verhinderung des Herausnehmens eines eingeschobenen Funkgerätes, dadurch gekennzeichnet, dass das Schloss (14) in Aussparungen der Schalen (19, 20) eingelegt ist.

7. Köcher nach dem Patentanspruch 6, bei welchem die eine Schale (20) als Grundgehäuse und die zweite als Deckel (19) dient, bei welchem ferner der genannte Deckel (19) mit in das Grundgehäuse (20) eingeschraubten, durch ihn führenden Schrauben (21) befestigt ist, dadurch gekennzeichnet, dass auf einem Teil der innern Oberfläche des Deckels (19) eine Metallplatte (23) mit durch diese Platte und den Deckel gemeinsam verlaufenden Löchern angeordnet ist und dass das Grundgehäuse Aussparungen (30) zur Ermöglichung eines Zugangs zu den genannten Löchern aufweist, das Ganze derart, dass der Köcher mit Hilfe von die genannten Löcher durchsetzenden Schrauben (24) auf einer Unterlage (25) befestigbar ist und dass bei einem derart befestigten Köcher, solange ein Funkgerät darin eingeschoben ist, weder die die beiden Schalen (19, 20) verbindenden noch die den Köcher an der Unterlage (25) befestigenden Schrauben (21, 24) zugänglich sind.

**Claims**

1. Case for temporarily holding a portable wireless set and wireless set having a chargeable battery and a part (1) in the shape of a rectangular parallelepiped provided with a base surface (27), which part is insertable into the case through an insertion opening (28), with sliding contacts and plug contacts mounted on both the case and the wireless set and mutually cooperating upon insertion of the wireless set for supplying a feed voltage for the wireless set and for charging the battery from a feed-voltage source connected to the case, on the one hand, and for connecting to the wireless set arrangements such as aerial, speaking and remote control equipment connected to the case, on the other hand, characterized in that the case is open at the end (29) opposite the insertion opening (28), that the contacts (8, 13) for supplying the feed voltage are mounted as sliding contacts on the side faces of the said part (1) in the shape of a rectangular parallelepiped, and that the remaining contacts are mounted as plug contacts (5, 9) running in the insertion direction on the side facing the said insertion opening (28) of a jutty (4) of the wireless set fixed on the said part (1) in the shape of a rectangular parallelepiped, on the one hand, and on the case at a location beside the insertion opening (28) corresponding to the plug contacts on the wireless set, on the other hand.

2. Case according to patent claim 1, characterized in that it is composed of two shells (19, 20) made exclusively of plastics, exhibiting recesses, and screwed to one another, that the sliding contacts (13) are secured to at least one plate (12), and that both the plugs (9) bearing the plug contacts and the said plate (12) are fitted in parts of the said recesses without any particular fastenings.

3. Case according to patent claim 2 which is suitable for holding various wireless sets, the parts (1) of which in the shape of a rectangular parallelepiped exhibit the same cross-section but different lengths, characterized in that the sliding contacts (13) are divided into at least two groups and that these groups are each disposed at a different distance from the insertion opening, whereby in each instance the contacts of a single one of these groups cooperate with the contacts (8) mounted on the inserted wireless set, and the group establishing the contact is determined by the length of the said part (1) in the shape of a rectangular parallelepiped.

4. Case according to patent claim 3, characterized in that it exhibits at its end facing away from the insertion opening (28) a number, corresponding to the number of contact groups less one, of grooves (26) running parallel to the edge of the opening (29) situated there, the distances of which grooves from the insertion opening (28) lie between the analogous distances of the contact groups and which thus delimit annular sections each containing a contact group and facilitate a sawing-off of one or more such sections for the purpose of shortening the length of the case to a size adapted to the longest wireless set to be inserted.

5. Case according to patent claim 2 having a support for the wires (10) leading from the contacts to the outside, characterized in that the support consists of a connection board (11) which is fitted without any particular fastenings in recesses situated in the said shells (19, 20).

6. Case according to patent claim 2, containing a lock (14) for preventing the removal of an inserted wireless set, characterized in that the lock (14) is fitted in recesses of the shells (19, 20).

7. Case according to patent claim 6, in which one shell (20) serves as a base housing and the second as a cover (19), in which further the said cover (19) is secured by means of screws (21) running through it and screwed into the base housing (20), characterized in that a metal plate (23) with holes running jointly through this plate and the cover is disposed on a portion of the inside surface of the cover (19) and that the base housing exhibits recesses (30) for enabling access to the said holes, the whole in such a way that the case is securable to a supporting surface (25) with the aid of screws (24) passing through the said holes, and that in the case of a case secured in such a way, as long as a wireless set is inserted therein, neither the screws (21) connecting the two shells (19, 20) nor the screws (24) securing the case to the supporting surface (25) are accessible.

**Revendications**

1. Fourreau destiné à recevoir temporairement un appareil émetteur portatif, et appareil émetteur portatif équipé d'une batterie susceptible d'être rechargée, ayant une forme quadrangulaire dans une de ses parties (1), cette partie quadrangulaire présentant une face frontale de base (27) et étant susceptible d'être engagée dans le fourreau par une ouverture d'entrée (28), le fourreau et l'appareil émetteur étant équipés de contacts à frottement et à enfichage coopérant mutuellement lors de l'engagement de l'appareil et assurant, d'une part, la conduction d'une tension d'alimentation dans le but de recharger la batterie à partir d'une source de tension raccordée au fourreau, et d'autre part, le raccordement d'accessoires reliés au fourreau telle qu'une antenne et des dispositifs de transmission de la parole et de commande à distance, caractérisé en ce que le fourreau est ouvert du côté de l'extrémité (29) opposée à l'ouverture d'engagement (28), en ce que les contacts (8, 13) de conduction de la tension d'alimentation sont agencés sous forme de contacts glissants sur les faces latérales de ladite partie quadrangulaire (1) et en ce que les autres contacts sont agencés sous forme de contacts à enfichage (5, 9) orientés dans la direction d'engagement et placés, d'une part, sur un ergot (4) faisant partie de ladite partie quadrangulaire (1), plus précisément sur un côté de cet ergot qui est dirigé vers l'ouverture d'engagement (28) et d'autre part, sur le fourreau à un emplacement correspondant aux contacts à enfichage de l'appareil émetteur à côté de l'ouverture d'engagement (28).

2. Fourreau selon la revendication 1, caractérisé en ce qu'il est constitué exclusivement de deux coquilles (19, 20) en matière plastique vissées l'une à l'autre et présentant des logements, en ce que les contacts glissants (13) sont fixés sur au moins une plaque (12) et en ce que la fiche (9) qui porte les contacts à enfichage et ladite plaque (12) sont engagés sans fixation particulière dans une partie desdits logements.

3. Fourreau selon la revendication 2, agencé de façon à recevoir différents appareils émetteurs dont les parties quadrangulaires (1) présentent la même section mais sont de longueurs différentes, caractérisé en ce que les contacts glissants (13) sont répartis en au moins deux groupes et que ces groupes sont disposés à différentes distances de l'ouverture d'engagement, de sorte que seuls les contacts de l'un de ces groupes coopèrent avec les contacts (8) que porte l'appareil émetteur engagé dans le fourreau, le groupe de contacts qui établit la connexion étant ainsi déterminé par la longueur de ladite partie quadrangulaire (1).

4. Fourreau selon la revendication 3, caractérisé en ce qu'il présente à son extrémité opposée à l'ouverture d'engagement (28) plusieurs rainures (26) parallèles aux bords de l'ouverture (29) opposée à celle d'engagement, le nombre de ces rainures correspondant au nombre de groupes de contacts diminué de un, les distances entre ces rainures et l'ouverture d'entrée (28) ayant une valeur intermédiaire entre les écartements des groupes de contacts de sorte que ces rainures délimitent des segments de forme annulaire comprenant chacun un groupe de contacts et facilitent ainsi la séparation par sciage d'un ou de plusieurs segments afin de raccourcir le fourreau et d'ajuster sa longueur au plus long des appareils qu'il est destiné à recevoir.

5. Fourreau selon la revendication 2, comprenant un élément d'appui pour des conducteurs (10) s'étendant depuis les contacts vers l'extérieur, caractérisé en ce que l'élément d'appui est constitué d'une plaque conductrice (11) engagée sans fixation particulière dans des logements ménagés dans lesdites coquilles (19, 20).

6. Fourreau selon la revendication 2, comprenant une serrure (14) destinée à empêcher l'extraction d'un appareil émetteur après son engagement dans le fourreau, caractérisé en ce que la serrure (14) est engagée dans des logements des coquilles (19, 20).

7. Fourreau selon la revendication 6, dans lequel l'une des coquilles (20), est agencée en boîtier et l'autre (19) en couvercle, et dans lequel le couvercle (19) est fixé au boîtier (20) par des vis (21) engagées dans le boîtier et le traversant, caractérisé en ce qu'une plaque métallique (23) est disposée sur une partie de la surface interne du couvercle (19), en ce que des trous communiquants traversent ladite plaque du couvercle et en ce que le boîtier présente des logements (30) donnant accès auxdits trous, le tout étant agencé de telle manière que le fourreau puisse être fixé sur un socle (25) au moyen de vis (24) traversant lesdits trous et que, lorsque le fourreau est fixé de cette manière, et aussi longtemps qu'il contient un appareil émetteur, ni les vis qui relient les deux coquilles (19, 20) ni celles qui fixent le fourreau à son socle (25) ne sont accessibles.

**Fig.1**

2

3

4

1

**Fig.2**

30

23

24

20

26

**Fig.3**

23

24

25

19

21

9

20

14

28

**Fig. 4**